Europäisches Patentamt

(19) European Patent Office

Office européen des brevets

(11) Publication number: **0 101 191**
**B1**

(12) # EUROPEAN PATENT SPECIFICATION

(45) Date of publication of patent specification: **25.03.87**

(51) Int. Cl.⁴: **H 02 G 1/12**

(21) Application number: **83304113.0**

(22) Date of filing: **15.07.83**

(54) Tool and method for trimming coaxial cable.

(30) Priority: **17.08.82 US 408959**

(43) Date of publication of application:
**22.02.84 Bulletin 84/08**

(45) Publication of the grant of the patent:
**25.03.87 Bulletin 87/13**

(84) Designated Contracting States:
**BE DE FR GB IT NL SE**

(56) References cited:
**BE-A- 835 938**
**GB-A-1 057 254**
**US-A-1 567 812**
**US-A-3 346 949**

(73) Proprietor: **AMP INCORPORATED**
**P.O. Box 3608 449 Eisenhower Boulevard**
**Harrisburg Pennsylvania 17105 (US)**

(72) Inventor: **Michael, George Wilson III**
**722 Felty Drive**
**Harrisburg Pennsylvania 17111 (US)**

(74) Representative: **Gray, Robin Oliver et al**
**BARON & WARREN 18 South End Kensington**
**London W8 5BU (GB)**

Courier Press, Leamington Spa, England.

## Description

This invention relates to a tool and more particularly to a tool and method for trimming coaxial cable.

Radio frequency performance is highly important in many high frequency applications such as, for example, phase array radar equipment. The many coaxial cable lines used in such equipment must have precise lengths so that the phase shift of the signals moving therealong is held to a very tight tolerance.

The electrical lengths of coaxial cables to be terminated prior to the coaxial cables being permanently terminated can be measured to make certain the electrical lengths of the cables are correct. This is done by cutting the coaxial cable to the desired length, permanently terminating one end of the coaxial cable with a coaxial connector, applying a phase-matching test connector to the other end of the cable, and measuring the electrical length of the cable to determine if the length is correct. If it is, the test connector is removed and a coaxial connector is permanently terminated to the other end of the cable. If the cable is too long, the test connector is removed, the cable end is trimmed, the test connector is reapplied to the terminal end, the electrical length is measured, and if correct, the test connector is removed and the coaxial connector is permanently terminated to the trimmed end.

In most cases, the cables have to be trimmed to the precise lengths prior to being permanently terminated.

GB—A—1 057 254 discloses a cable holder having means for clamping a shielded cable therein and rotatably coupled to a cutter holder having a cutter threadably mounted therein whereby the cutter may be moved in a helical path about an end portion of the cable shield until the cutter holder abuts a stop surface.

US—A—3 346 949 discloses cable dressing means comprising a cable holder having means for clamping a cable therein and means for guiding cutting tools for cutting or dressing the cable end.

BE—A—835 938 discloses a cable holder having means for releasably clamping a cable therein and guide means for guiding rotatable cutter means for dressing an end portion of the cable.

According to the present invention, a tool for trimming an end of a coaxial cable comprising a cable holder and clamping means for releasably clamping a cable therein, a cutter holder and in which a cutting member is secured rotatably coupled to the cable holder, the cable holder comprises a bore into which an end portion of a clamped cable may extend and in which a cylindrical extension of the cutter holder is movably mounted to expose cutter blades of said cutting member to a cable end in said bore, and opposed stop surfaces arranged to limit movement of the cutting member towards the cable holder, the cylindrical section having a bore communicating with said cutting member and arranged to receive the end portion of the cable, characterised in that releasable securing means are provided for releasably securing said cylindrical section in said bore of said cable holder against relative movement of said stop surfaces whereby said stop surfaces may initially be spaced apart by a distance corresponding to a desired amount of cable to be trimmed, said cylindrical section secured in said cable holder bore by said securing means, said cable inserted into the bores to engage cutter blades of said cutting member and clamped in said holder, and said securing means being released to allow movement together of said stop surfaces on rotation of said cutting member to trim an end portion of said cable.

The invention also includes a method of trimming an end of a coaxial cable, in which a cable-holder and a cutter-holder are relatively rotated to cause a cutting member to engage the end of a cable secured in the cable-holder until opposed stop surfaces on the cable and cutter-holders abut characterized by the steps of positioning opposed stop surfaces of a cable-holder and a cutter-holder at a distance from one another equal to the amount that is to be trimmed from a cable end; releasably securing the cable-holder and cutter-holder together; clamping the cable to be trimmed in the cable-holder with the cable end being positioned against cutting blades of a cutting member of the cutter-holder; releasing the cable-holder and cutter-holder from each other; and operating the cutter member so that the cutting blades trim the cable end until the stop surfaces engage one another.

The invention will now be described, by way of example, with reference to the accompanying partly diagrammatic drawings, in which:—

Figure 1 is an exploded perspective view of the parts of the coaxial cable trimming tool.

Figure 2 is a perspective view of the tool in an assembled form.

Figures 3 through 6 are cross-sectional views showing the tool in operation trimming the end of a semirigid coaxial cable.

Figure 7 is a cross-sectional view of an alternative embodiment of the invention.

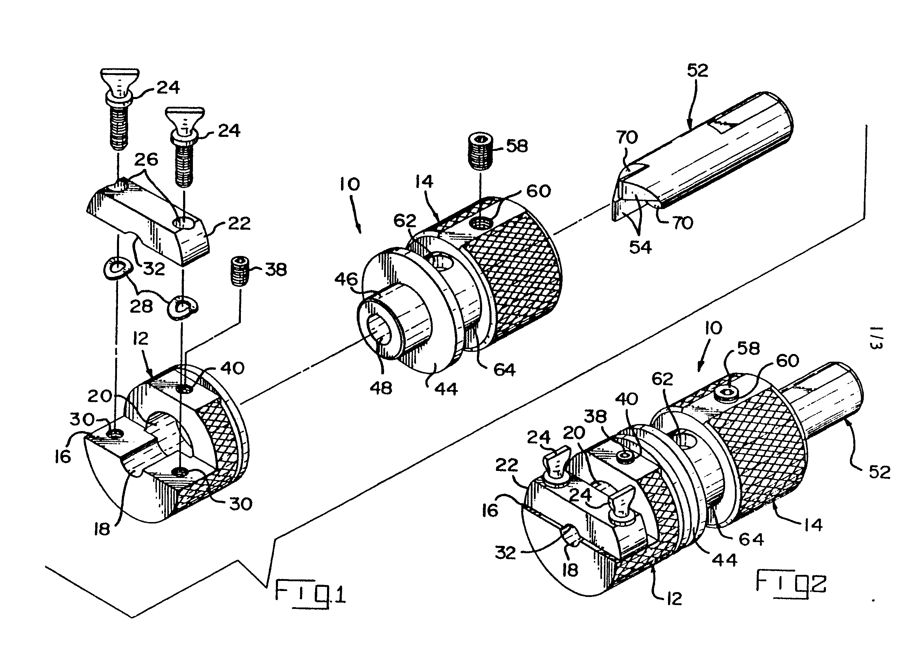

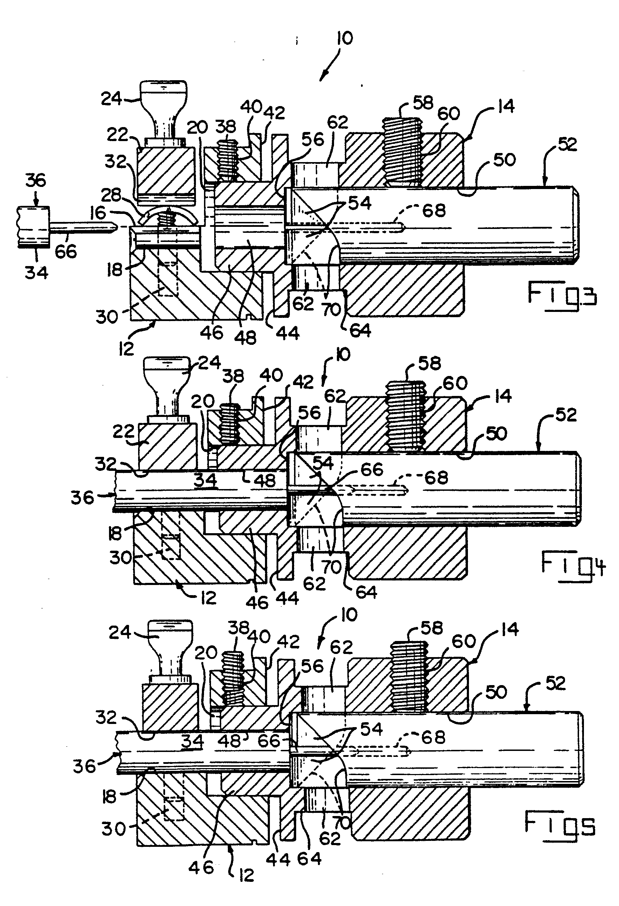

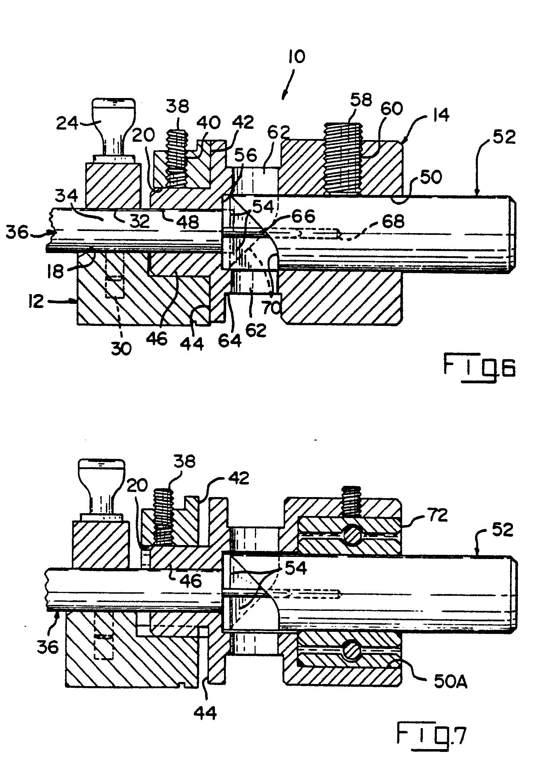

Coaxial cable trimming tool 10 as shown in Figures 1 and 2 comprises a cable-holding member 12 and a cutter-holding member 14. Cable-holding member 12 has a flat surface 16 in which is located an arcuate recess 18. A bore 20 is located in member 12 and is in axial alignment and communication with recess 18. Clamping member 22 is maintained in position relative to flat surface 16 by thumbscrews 24 which pass freely through holes 26, spring washers 28, and threadably engage threaded holes 30. An arcuate recess 32 is located in clamping member 22 in opposed alignment with arcuate recess 18. As shown in Figures 4 through 6, outer conductor 34 of semirigid coaxial cable 36 is disposed in opposing recesses 18, 32 with clamping member 22 in engagement with outer conductor 34 to clampingly secure coaxial cable 36 in position in cable-holding member 12. A set screw 38 is threadably disposed in threaded hole 40. Surface 42 is located at the front end of member 12 and defines a stop surface.

Cutter-holding member 14 has a stop surface 44 out of which extends a cylindrical section 46 which is concentric with surface 44 and is matable within bore 20 of cable-holding member 12. Cylindrical section 46 is movable along bore 20 and is secured therein by means of set screw 38 as shown in Figure 3. Cylindrical section 46 has a bore 48 for receiving coaxial cable 36 therein as shown in Figures 4 through 6. Bore 48 is in axial alignment and communication with bore 50 in which is disposed a cutter member 52 having cutter blades 54 that abut against a surface 56 separating bores 48 and 50. A set screw 58 is threadably mounted in threaded hole 60 securing cutter member 52 in bore 50 and against surface 56. Holes 62 extend through reduced section 64 and communicate with bore 50 in alignment with cutter blades 54.

Tool 10 is to be used to trim the end of semirigid coaxial cable 36 for phase-matching purposes when cable 36 has been tested to determine if its electrical length is correct when tested in accordance with conventional testing practices. The amount that the cable has to be trimmed will be from .0254 mm (.001 inch) to 5.08 mm (.020 inch) but it can be larger. After coaxial cable 36 has been tested to determine whether its electrical length is correct or not, and assuming the cable is too long and needs to be trimmed to a precise length, a phase-matching test connector is removed from the end of cable 36 and its end trimmed in accordance with the following procedure.

A determination is made to see how much cable end must be trimmed so that the cable has the precise electrical length. After set screw 38 has been loosened, a feeler gauge (not shown) is positioned between stop surfaces 42, 44 to position cable-holding member 12 relative to cutter-holder member 14 at a distance determined by the feeler gauge which is representative of the amount of trimming that has to be performed on the end of the cable so that the cable is at its precise length. Set screw 38 is then tightened to secure members 12, 14 at this distance. The end of cable 36 is positioned in recesses 18, 32 and within bore 38 until the end of outer conductor 34 abuts against cutter blades 54 as illustrated in Figure 4 with center conductor 66 disposed in bore 68 in cutter member 52. Clamping member 22 is clamped tightly onto outer conductor 34 via screws 24. With the end of outer conductor 34 and the dielectric sheathing covering center conductor 66 securely positioned against cutter blades 54, set screw 38 is loosened and cutter-holding member 14 is rotated relative to cable-holding member 12 either manually or by the end of cutter member 52 extending outwardly from cutter-holding member 14 being connected to a driving member such as, for example, an electric drill, cutter blades 54 trim outer conductor 34 and the insulation sheath until stop surfaces 44, 42 engage thereby resulting in the cable 36 being trimmed to the desired length. Trimmings of outer conductor 34 and the insulation sheath are expressed from bore 50 by curved surfaces 70 of cutter blades 54 forcing the trimmings out of holes 62. The trimmed end of the cable is removed from cable-holding member 12 by loosening screws 24 to relieve the pressure of clamping member 22, the phase-testing connector is reapplied onto the end of trimmed cable 36 so that the electrical length can be measured to make certain that the cable length is correct and, if it is, the test connector is removed and a coaxial connector is permanently terminated on the trimmed end of the cable.

The diameter of bore 48 in which cable 36 is positioned must be closely related to the diameter of outer conductor 34 to enable the outer conductor to be cleanly trimmed as section 46 moves along conductor 34 while cutter blades 54 trim the metal and insulation from the cable end during operation of the cutter blades. This assures clean trimming of the outer conductor and the insulation sheath.

An alternative embodiment is shown in Figure 7 with cutting member 52 secured in a bearing 72 that is secured in bore 50A so that cutter member 52 rotates relative to cutter-holding member 14. Cylindrical section 46 will move axially along bore 20 until stop surfaces 42, 44 engage when rotating cutter blades 54 trim the cable end after cable 36 is clamped in position and set screw 38 unsecures section 46 from its position in bore 20. A drill member or the like operates cutter member 52. If desired, section 46 and bore 20 can have a key arrangement so that these members move axially but not rotatively relative to each other.

## Claims

1. A tool for trimming an end of a coaxial cable (36) comprising a cable-holder (12) and clamping means (22, 24) for releasably clamping a cable (36) therein, a cutter holder (14) and in which a cutting member (52) is secured rotatably coupled to the cable holder (12), the cable holder (12) comprising a bore (20) into which an end portion of a clamped cable may extend and in which a cylindrical extension (46) of the cutter holder is movably mounted to expose cutting blades (54) of said cutting member (52) to a cable end in said bore (20), and opposed stop surfaces (42, 44) arranged to limit movement of the cutting member (52) towards the cable holder (12), the cylindrical section (46) having a bore (48) communicating with said cutting member (52) and arranged to receive the end portion of the cable (36), characterised in that releasable securing means (38) are provided for releasably securing said cylindrical section (46) in said bore (20) of said cable holder (12) against relative movement of said stop surfaces (42, 44) whereby said stop surfaces (42, 44) may initially be spaced apart by a distance corresponding to a desired amount of cable to be trimmed, said cylindrical section (46) secured in said cable holder bore (20) by said securing means (38), said cable inserted into the bores (20, 48) to engage cutter blades (54) of said cutting member (52) and clamped in said holder (12), and said securing means being released to allow movement together of said stop surfaces (42, 44) on rotation of said cutting member (52) to trim an end portion of said cable (36).

2. A tool as set forth in claim 1, characterised in that holes (62) are located in said cutter-holder (14) in communication with said bore (50) and said cutter blades (54) for removal of material trimmed from the cable (36).

3. A tool as set forth in claim 1, characterised in that said cutting member (52) has a section extending outwardly from said cutter-holder (14).

4. A tool as set forth in claim 1, characterised in that said cutting member (52) includes a bore (68) to accommodate a center conductor (66) of the coaxial cable (36).

5. A tool as set forth in claim 1, characterised in that said cutting member (52) is secured in a bearing (72) secured in a bore (50A) of the cutter-holder (14) for relative rotation.

6. A method of trimming an end of a coaxial cable (36), in which a cable holder (12) and a cutter-holder (14) are relatively rotated to cause a cutting member (52) to engage the end of a cable secured in the cable holder (12) until opposed stop surfaces (42, 44) on the cable and cutter holders (12, 14) abut, characterised by the steps of positioning opposed stop surfaces (42, 44) of a cable-holder (12) and a cutter-holder (14) at a distance from one another equal to the amount that is to be trimmed from a cable end; releasably securing the cable-holder (12) and cutter-holder (14) together; clamping the cable (36) to be trimmed in the cable-holder (12) with the cable end being positioned against cutting blades (54) of a cutting member (52) of the cutter-holder (14); releasing the cable-holder (12) and the cutter-holder (14) from each other; and operating the cutter member (52) so that the cutting blades (54) trim the cable end until the stop surfaces (42, 44) engage one another.

7. A method as set forth in claim 6, characterised in that in operating the cutting member (52) the cutter-holder (14) and the cutting member (52) are rotated relative to the cable-holder (12).

8. A method as set forth in claim 6, characterised in that in operation of the cutting member, the cutting member (52) is rotated relative to the cutter-holder (14) and the cable-holder (12).

9. A method as set forth in claim 6, characterised by the further step of removing material trimmed from the cable end from the cutting blades (54) through the cutter-holder (14).

**Patentansprüche**

1. Werkzeug zum Trimmen eines Endes eines Koaxialkabels (36), mit einem Kabelhalter (12) und einer Klemmeinrichtung (22, 24) zum lösbaren Festklemmen eines Kabels (36) in dieser, mit einem Schneidgliedhalter (14), in dem ein Schneidglied (52) mit dem Kabelhalter (12) drehbar gekoppelt befestigt ist, wobei der Kabelhalter (12) eine Bohrung (20) aufweist, in die sich ein Endbereich eines festgeklemmten Kabels hineinerstrecken kann und in der ein zylindrischer Fortsatz (46) des Schneidgliedhalters beweglich montiert ist, um Schneidklingen (54) des Schneidgleids (52) zu einem in der Bohrung (20) befindlichen Kabelende hin freizulegen, und mit einander gegenüberliegenden Anschlagflächen (42, 44) die derart angeordnet sind, daß sie die Bewegung des Schneidglieds (52) in Richtung auf den Kabelhalter (12) begrenzen, wobei der zylindrische Abschnitt (46) eine Bohrung (48) aufweist, die mit dem Schneidglied (52) in Verbindung steht und dazu ausgelegt ist, den Endbereich des Kabels (36) aufzunehmen, dadurch gekennzeichnet daß eine lösbare Befestigungseinrichtung (38) vorgesehen ist zum lösbaren Befestigen des zylindrischen Abschnitts (46) in der Bohrung (20) des Kabelhalters (12) zur Verhinderung einer Relativbewegung der Anschlagflächen (42, 44), wodurch die Anschlagflächen (42, 44) zuerst in einem Abstand voneinander angeordnet werden können, der einem gewünschten Ausmaß abzutrimmenden Kabels entspricht, und wodurch der zylindrische Abschnitt (46) mittels der Befestigungseinrichtung (38) in der Kabelhalterbohrung (20) befestigt werden kann und das Kabel derart in die Bohrungen (20, 48) eingeführt werden kann, daß es an den Schneidklingen (54) des Schneidglieds (52) angreift, und das Kabel in dem Halter (12) festgeklemmt werden kann, und daß die Befestigungseinrichtung gelöst wird, um ein sich Zusammenbewegen der Anschlagflächen (42, 44) bei Rotation des Schneidglieds (52) zum Trimmen eines Endbereichs des Kabels (36) zu gestatten.

2. Werkzeug nach Anspruch 1, dadurch gekennzeichnet, daß in dem Schneidgliedhalter (14) Löcher (62) vorgesehen sind, die zur Entfernung von von dem Kabel (36) abgetrimmtem Material mit der Bohrung (50) und den Schneidklingen (54) in Verbindung stehen.

3. Werkzeug nach Anspruch 1, dadurch gekennzeichnet, daß das Schneidglied (52) einen sich von dem Schniedgleidhalter (14) nach außen erstreckenden Abschnitt aufweist.

4. Werkzeug nach Anspruch 1, dadurch gekennzeichnet, daß das Schneidglied (52) eine Bohrung (68) zur Aufnahme eines Mittelleiters (66) des Koaxialkabels (36) aufweist.

5. Werkzeug nach Anspruch 1, dadurch gekennzeichnet, daß das Schneidglied (52) in einem in einer Bohrung (50A) des Schneidgliedhalters (14) befestigten Lager (72) zur Ausführung einer Relativ-Rotationsbewegung befestigt ist.

6. Verfahren zum Trimmen eines Endes eines Koaxialkabels (36), bei dem ein Kabelhalter (12) und ein Schneidgliedhalter (14) relativ zueinander gedreht werden, um ein Schneidglied (52) dazu zu veranlassen, an dem Ende eines in dem Kabelhalter (12) befestigten Kabels anzugreifen, bis einander gegenüberliegende Anschlagflächen (42, 44) an dem Kabelhalter (12) und dem Schneidgliedhalter (14) aneinander anliegen, gekennzeichnet durch folgende Schritte:

Positionieren von einander gegenüberliegenden Anschlagflächen (42, 44) eines Kabelhalters (12) und eines Schneidgliedhalters (14) in einem Abstand voneinander, der dem von einem Kabelende abzutrimmenden Ausmaß gleich ist; lösbares Befestigen des Kabelhalters (12) und des Schneidgliedhalters (14) aneinander; Festklemmen des zu trimmenden Kabels (36) in dem Kabelhalter (12), wobei das Kabelende angrenzend an Schneidklingen (54) eines Schneidglieds (52) des Schneidgliedhalters (14) positioniert wird; Freigeben des Kabelhalters (12) und des Schneidgliedhalters (14) voneinander; und Betätigen des Schneidglieds (52), so daß die Schneidklingen (54) das Kabelende trimmen, bis die Anschlagflächen (42, 44) aneinander angreifen.

7. Verfahren nach Anspruch 6, dadurch gekennzeichnet, daß bei der Betätigung des Schneidglieds (52) der Schneidgliedhalter (14) und das Schneidglied (52) relativ zu dem Kabelhalter (12) gedreht werden.

8. Verfahren nach Anspruch 6, dadurch gekennzeichnet, daß bei der Betätigung des Schneidglieds das Schneidglied (52) relativ zu dem Schneidgliedhalter (14) und dem Kabelhalter (12) gedreht wird.

9. Verfahren nach Anspruch 6, gekennzeichnet durch den weiteren Schritt, daß von dem Kabelende abgetrimmtes Material durch den Schneidgliedhalter (14) hindurch von den Schneidklingen (54) entfernt wird.

**Revendications**

1. Outil pour ajuster une extrémité d'un câble coaxial (36) comprenant un support de câble (12) et des moyens (22, 24) de bridage destinés à brider de manière amovible un câble (36), un support (14) de couteau dans lequel un élément de coupe (52) est fixé et est accouplé en rotation au support de câble (12), le support de câble (12) présentant un alésage (20) dans lequel un tronçon extrême d'un câble bridé peut être disposé et dans lequel un prolongement cylindrique (46) du support de couteau est monté de façon mobile pour exposer à des lames de coupe (54) dudit élément de coupe (52) une extrémité de câble disposée dans ledit alésage (20), et des surfaces d'arrêt opposées (42, 44) agencées pour limiter le mouvement de l'élément de coupe (52) vers le support de câble (12), la section cylindrique (46) présentant un alésage (48) communiquant avec ledit élément de coupe (52) et agencé pour recevoir le tronçon extrême du câble (36), caractérisé en ce que des moyens (38) de fixation amovibles sont prévus pour fixer de manière amovible ladite section cylindrique (46) dans ledit alésage (20) dudit support de câble (12) afin d'empêcher tout mouvement relatif desdites surfaces d'arrêt (42, 44) pour que lesdites surfaces d'arrêt (42, 44) puissent initialement être espacées d'une distance correspondant à une valeur à laquelle on souhaite ajuster le câble, ladite section cylindrique (46) étant fixée dans ledit alésage (20) du support de câble par lesdits moyens de fixation (38), ledit câble étant inséré dans les alésages (20, 48) pour entrer en contact avec les lames de coupe (54) dudit élément de coupe (52) et étant bridé dans ledit support (12), et lesdits moyens de fixation étant libérés pour permettre auxdites surfaces d'arrêt (42, 44) de se déplacer ensemble sous l'effet d'une rotation dudit élément de coupe (52) afin d'ajuster un tronçon extrême dudit câble (36).

2. Outil selon la revendication 1, caractérisé en ce que des trous (62) sont ménagés dans ledit support (14) de couteau en communication avec ledit alésage (50) et lesdites lames de coupe (54) pour évacuer la matière résultant de la coupe d'ajustage du câble (36).

3. Outil selon la revendication 1, caractérisé en ce que ledit élément de coupe (52) comporte une section dépassant vers l'extérieur dudit support de couteau (14).

4. Outil selon la revendication 1, caractérisé en ce que ledit élément de coupe (52) présente un alésage (68) destiné à recevoir un conducteur central (66) du câble coaxial (36).

5. Outil selon la revendication 1, caractérisé en ce que ledit élément de coupe (52) est fixé dans un palier (72) lui-même fixé dans un alésage (50A) du support (14) de couteau afin de pouvoir tourner.

6. Procédé pour ajuster une extrémité d'un câble coaxial (36), dans lequel un support de câble (12) et un support de couteau (14) peuvent tourner l'un par rapport à l'autre afin d'amener un élément de coupe (52) en contact avec l'extrémité d'un câble fixé dans le support de câble (12) jusqu'à ce que les surfaces d'arrêt opposées (42, 44) situées sur les supports (12, 14) du câble et du couteau soient en butée, caractérisé par les étapes qui consistent à positionner des surfaces d'arrêt opposées (42, 44) d'un support de câble (12) et d'un support de couteau (14) à une distance l'une de l'autre, égale à la distance sur laquelle une extrémité de câble doit être ajustée; à fixer de manière amovible le support de câble (12) et le support de couteau (14) l'un à l'autre; à brider le câble (36) à ajuster dans le support de câble (12) de manière que l'extrémité du câble soit positionnée contre des lames de coupe (54) d'un élément de coupe (52) du support de couteau (14); à libérer l'un de l'autre le support de câble (12) et le support de couteau; et à actionner l'élément de coupe (52) afin que les lames de coupe (54) ajustent l'extrémité du câble jusqu'à ce que les surfaces d'arrêt (42, 44) portent l'une contre l'autre.

7. Procédé selon la revendication 6, caractérisé en ce que, dans la mise en oeuvre de l'élément de coupe (52), le support de couteau (14) et l'élément de coupe (52) sont mis en rotation par rapport au supports de (12) de câble.

8. Procédé selon la revendication 6, caractérisé en ce que dans la mise en oeuvre de l'élément de coupe, l'élément de coupe (52) est mis en rotation par rapport au support (14) de couteau et au support (12) de câble.

9. Procédé selon la revendication 6, caractérisé par l'étape supplémentaire qui consiste à retirer la matière coupée lors de l'ajustage de l'extrémité du câble par les lames de coupe (54) à travers le support de couteau (14).

Fig.1

Fig.2

Fig.3

Fig.4

Fig.5

FIg.6

FIg.7